## Europäisches Patentamt

## European Patent Office

## Office européen des brevets

(11) Veröffentlichungsnummer: **0 104 341**
**B1**

(12) **EUROPÄISCHE PATENTSCHRIFT**

(45) Veröffentlichungstag der Patentschrift:
25.01.89

(21) Anmeldenummer: **83107046.1**

(22) Anmeldetag: **19.07.83**

(51) Int. Cl.⁴: **B 01 D 41/02**, B 01 D 23/24

(54) Verfahren zur Reinigung von partikelhaltigen rückspülbaren Filterbetten.

(30) Priorität: 05.08.82 DE 3229219

(43) Veröffentlichungstag der Anmeldung:
04.04.84 Patentblatt 84/14

(45) Bekanntmachung des Hinweises auf die Patenterteilung:
25.01.89 Patentblatt 89/4

(84) Benannte Vertragsstaaten:
AT BE CH DE FR GB IT LI LU NL SE

(56) Entgegenhaltungen:
DD-A-5 735
DD-A-150 433
DE-A-1 921 860
DE-A-2 702 944
DE-B-1 517 627

(73) Patentinhaber: Wiegand, Hans Lothar,
Raiffeisenstrasse, D-6805 Heddesheim (DE)

(72) Erfinder: Wiegand, Hans Lothar, Raiffeisenstrasse,
D-6805 Heddesheim (DE)
Erfinder: Westram, Klaus, Rohrbacher Strasse 155,
D-6900 Heidelberg 1 (DE)

(74) Vertreter: Ratzel, Gerhard, Dr., Seckenheimer
Strasse 36a, D-6800 Mannheim 1 (DE)

EP 0 104 341 B1

**Beschreibung**

Die Erfindung betrifft ein Verfahren zur Reinigung von partikelhaltigen rückspülbaren Filterbetten bei der Wasseraufbereitung von Schwimmbad-, Trink- und Abwasseraufbereitungsanlagen, wobei das Filterbett im Gegenstrom zur Filtriervorrichtung mit einem fließfähigen Rückspülmittel beaufschlagt wird.

Bei der Aufbereitung von Trink-, Bade- und Betriebswasser ist das Filtern des Wassers ein bedeutender und grundlegender Verfahrensschritt. Dabei werden die Filter von Zeit zu Zeit durch Rückspülvorgänge gereinigt. Beim Filtern von Wasser sollen die festen Stoffe, die sich im unfiltrierten Wasser befinden, vom Filterbett zurückgehalten werden. Das Filterbett besteht aus porösem Material, z. B. Kieskörnern, an oder zwischen denen sich feste Stoffe absetzen. Dieser Absetzungsvorgang macht es erforderlich, daß das Filterbett, wenn es nicht nur einmal benutzt werden soll, in gewissen Zeitabständen gereinigt wird. Dabei wird Wasser entgegengesetzt der Richtung durch das Filter gepumpt, in der das Wasser beim Filtrationsvorgang den Filter durchströmt. Man nennt diesen Vorgang das Rückspülen.

Neben Wasser können auch Luft und Wasser-Luft-Gemische jeweils einzeln oder in Kombinationen miteinander zum Rückspülen eingesetzt werden.

Beim Rückspülvorgang werden gelegentlich, zur Reduzierung bzw. Beseitigung mikrobiellen Befalles, aus hygienischen Gründen Desinfektionsmittel zugesetzt.

Neben dem Ablösen und Ausschwemmen des Schmutzes hat der Rückspülvorgang auch die Aufgabe, feines Unterkorn, das sich aus dem Filtermateriel gebildet hat, auszuwaschen. Dieses Filterkorn erhöht mit seinen feinsten Fraktionen den Filterwiderstand, wenn es im Filter verbleibt.

Das Auswaschen des feinen Unterkorns ist aber nur dann möglich, wenn es bei der Rückspülung durch ausreichende Vergrößerung des Porenvolumens an die Oberfläche getragen und weiter in den Überlauftrichter fortgeschwemmt wird.

Die bisher angewendeten Rückspülverfahren arbeiten bei Teilchendurchmessern von 0,8 bis 3 mm mit Geschwindigkeiten des Rückspülwassers von 10 bis 60 m/Stunde (H.-G. Moll: "Die Ermittlung der hinreichenden Rückspülgeschwindigkeit für Sand- und Kiesfilter", gwf-wasser/abwasser <u>119</u> (1978) H. 3, Seite 103-110).

Der Rückspülvorgang mit verschiedenen Filterbettmaterialien wie Quarzkies, dolomitisches Material, Quarzsand und Filtersanden, bei Wasserspülungen und Wasser-Luft-Spülungen und dabei auftretende Volumenveränderungen des Filterbettes wurden ebenfalls untersucht (K.H. Kludig, G. Schürmann: "Ein Beitrag zur Frage der Rückspülung von Filteranlagen", gwf-wasser/abwasser <u>106</u> (1965) H. 14, Seite 371-378).

Dabei zeigte sich, daß zu geringe Rückspülgeschwindigkeiten verwendet werden und daß eine Beurteilung der Wasserspülung allein nach der Expansion des Filterbettes nicht ausreicht.

Die DE-AS-1 517 627 betrifft ein Verfahren zur Behandlung von in Abwasserkläranlagen verschmutzten Filtergeweben zur Entfernung von Pilzen, Schmutz, Öl, Fett und verstopfenden Salzen, dadurch gekennzeichnet, daß während einer Zeitspanne von mehr als 1 Stunde eine Mischung in einer maximalen Menge von 72 % (Gewicht/Volumen) mit derartigen Geweben kontaktiert wird, die aus

a)
einem aliphatischen quaternären Ammoniumsalz, das wenigstens eine Alkylgruppe mit 10 bis 18 Kohlenstoffatomen enthält,

b)
einem primären Alkylaminsalz, das 10 bis 18 Kohlenstoffatome in dem Alkylsubstituenten aufweist, und

c)
einer aliphatischen quaternären Ammoniumverbindung, mit wenigstens einer Alkylgruppe mit ungefähr 10 bis 18 Kohlenstoffatomen, die 2 bis ungefähr 25 Mol eines Alkylenoxydsubstituenten mit 2 bis 4 Kohlenstoffatomen enthält, besteht.

Die DD-PS-5735 beschreibt ein Verfahren zur Entfernung von Verunreinigungen aus oberflächen- oder austauschaktiven Stoffen, dadurch gekennzeichnet, daß die verunreinigten Materialien mit Netz- und/oder Emulgiermitteln, gegebenenfalls in Gegenwart von Reduktionsmitteln, behandelt werden. Dabei kommen Lösungen von triglykolamidsaurem Natrium und Natriumhydrosulfit sowie Lösungen von Polyoxyphenoläthyläther mit hochmolekularer Seitenkette und Natriumhydrosulfit zum Einsatz.

Die DE-OS-2 702 944 betrifft ein Verfahren zum Entfernen von Öl- und Fettfilm von den Kernoberflächen eines körnigen Materials für die Filterung von Abwasser in einem Abwasserfilter, wobei das körnige Material enthaltende Filterbett mit einem Abzugsraum versehen ist, gekennzeichnet durch Fördern einer gegebenen Menge eines chemischen Reinigungsmittels in den Abzugsraum, durch Fördern einer Rückspülflüssigkeit in den Abzugsraum und aufwärts durch das Filterbett, um das Filterbett im wesentlichen zu überfluten, durch Unterbrechen des Stroms der Rückspülflüssigkeit während einer gegebenen Zeitdauer, durch hydraulisches Durchwirbeln des in Berührung mit der flüssigen Reinigungslösung stehenden Filterbetts aus körnigem Material durch Fördern von zusätzlicher Rückspülflüssigkeit in den Abzugsraum, durch Unterbrechen des Stroms von Rückspülflüssigkeit während einer gegebenen Tränkzeit, und durch Einleiten eines gegebenen Rückspülzyklus im Anschluß an eine gegebene Anzahl von Tränkzyklen.

Die bisher angewandten Rückspülverfahren bewirken eine unzureichende Durchwirbelung der Partikel des Filterbettes und eine unvollständige Auswaschung und Austragung von Schmutz und Abrieb-Partikeln.

Demgegebüber liegt vorliegender Erfindung die Aufgabe zugrunde, ein Verfahren zu liefern, das eine vollständige Durchwirbelung des partikelhaltigen Filterbettes und einen vollständigen Austrag von Schmutz, Abrieb und Ablagerungen bewirkt, und das den neuerdings zusätzlichen Anforderungen, z. B. bezüglich Wirksamkeitsgrad und Umweltschutz, Genüge tut.

Diese Aufgabe wird erfindungsgemäß bei einem Verfahren der eingangs genannten Gattung durch gelöst, daß das Rückspülmittel als nicht hydrolyseempfindliche, wasserlösliche, grenzflächenaktive Substanz Polyacrylate im Molekulargewichtsbereich von 500 bis 500 000 Daltons enthält.

Eine besondere Ausführungsform ist dadurch gekennzeichnet, daß als fließfähiges Rückspülmittel eine tensid-haltige Lösung verwendet wird, die als Tensid oder Tenside, Anion-Tenside, Kation-Tenside, Amphotenside, beispielsweise Seifen, und gegebenenfalls zusätzlich ein oder mehrere Polyelektrolyte, beispielsweise ein Polyphosphat eines Molekulargewichts beispielsweise von 5000 Daltons enthält.

Die überraschenden, sprunghaft auftretenden Vorteile des erfindungsgemäßen Verfahrens werden im folgenden Vergleichs-Beispiel deutlich.

Die im Vergleichsbeispiel vorgelegte Meßreihe zeigt die sprunghaft wirksame Beseitigung und Überwindung der Nachteile der Verfahren gemäß dem bisherigen Stand der Technik.

**Vergleichs-Beispiel**

Versuche zum Rückspülvorgang bei der Aufbereitung von Badewassern in Kiesfiltern.

**1. Versuchsbedingungen**

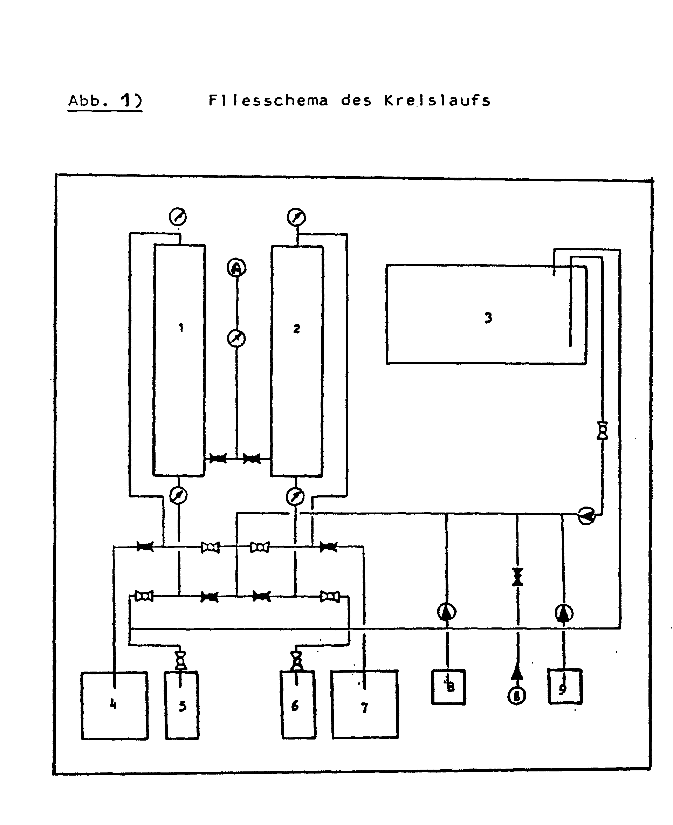

Die Untersuchungen mit dem erfindungsgemäßen Mittel wurden in einer Anlage durchgeführt, die in Abb. 1 dargestellt ist. Die Daten für die einzelnen Komponenten der Anlage sind in der Tabelle am Ende der Beschreibung zusammengefaßt. Dabei entsprechen die Filter hinsichtlich Höhe und Durchmesser denen, die auch in anderen Untersuchungen zur Frage der Rückspülung von Filteranlagen (MOLL, 1978, KLUDIG und SCHÜRMANN, 1965) verwendet worden sind. Nach KLING (G. Kling, Druckverlust von Kugelschüttung, VDI-Zeitschrift 84, (1940), 85) wird der Druckverlust im Filter weniger als 5 % verändert, wenn d/D < 0,016 ist. Dabei bedeutet d = Korndurchmesser und D = Filterdurchmesser.

Entsprechend dem für die Filterbeschickung verwendeten Quarzsand mit einer Korngröße von 0,8 - 1,2 mm ergibt dies für die Anlage bei d maximal 1,2 mm und D = 100 mm einen Wert von 0,012 der damit deutlich unter dem von 0,016 liegt.

Die Schichthöhe des Filtermaterials wurde gemäß DIN-Vorlage 19643 auf 1200 mm eingestellt.

Um Druckverluste zu vermeiden wurden alle Verbindungsstücke mit PVC-Rohren installiert.

Das Fließschema des Wasserkreislaufes für die Aufbereitung des Beckenwassers (Filtration) ist in Abb. 1, dargestellt. Über eine Pumpe wird das Wasser aus dem Becken (3) in gleichmäßiger Verteilung auf die Filter 1 und 2 aufgegeben, filtriert und wieder in das Becken eingeleitet. Bei diesem Vorgang kann über die Kontaktstelle 9 Flockungsmittel vor der Filtration hinzugegeben werden und über die Behälter 5 und 6 für die jeweiligen Filter getrennt filtriertes Wasser zur Analyse entnommen werden.

Bezüglich Abbildung 1 wird zusammenfassend bezüglich der Bezugszeichen und Symbole folgendes angegeben:

| | |
|---|---|
| FIG | Schieber geschlossen |
| FIG | Schieber offen |
| (1) | erster Filter |
| (2) | zweiter Filter . |
| (3) | Becken |
| (4) | Spülwasser erster Filter |
| (5) | Erstfiltrat erster Filter |
| (6) | Erstfiltrat zweiter Filter |
| (7) | Spülwasser zweiter Filter |
| (8) | Spülhilfsmittel |
| (9) | Flockungsmittel |
| (A) | Luftgebläse |
| (B) | Frischwasser |

Beim Rückspülvorgang wird über A die Luftspülung durchgeführt und B Frischwasser für die kombinierte Luft-Wasserspülung bzw. für die alleinige Wasserspülung zugeführt. Über den Behälter 8 wird das erfindungsgemäße Spülhilfsmittel in das System eingebracht und bei Verschluß des Schiebers zum Filter 1 nur der Filter 2 beschickt. Dies hat den Vorteil, daß die Rückspülvorgänge ohne erfindungsgemäßes Rückspülmittel (Filter 1) und der mit erfindungsgemäßem Rückspülmittel (Filter 2) parallel getestet werden können. Die jeweiligen Spülwasser werden für die Analyse in den Behältern 4 (für Filter 1) und 7 (für Filter 2) aufgefangen.

**2. Versuchsdurchführung und Ergebnisse**

3

2.1 Wirkung des erfindungsgemäßen Mittels auf die Tiefenwirkung der Fluidisierung des Filterbettes.

Um die Wirkung von erfindungsgemäßem Rückspülmittel auf die Tiefenwirkung der Fluidisierung des Filterbettes im Vergleich zur Luft-Wasserspülung ohne Spülhilfsmittel zu testen, wurde folgender Versuch durchgeführt:

2.1.1. Beide Filter wurden nicht beflockt oder verunreinigt.

2.1.2. Vom Filterboden beginnend wurde jeweils im Abstand von 150 mm farblich markierter Kies in einer Schichtdicke von 10 mm Stärke eingebracht.

2.1.2. Filter 2 wurde erfindungsgemäßes Rückspülmittel von 2 ltr./m³ zugegeben.

2.1.4. Nach einer Luftspülung bei einem Druck von 0,5 bar und einer Luftgeschwindigkeit von ca. 0,65 m/Stunde wurde anschließend über 10 Minuten eine Luft-Wasserspülung mit einem Wasserdruck von 0,5 bar, einer Wassergeschwindigkeit von 10 m/Stunde, einem Luftdruck von 0,5 bar und einer Luftgeschwindigkeit von ca. 60 m/Stunde durchgeführt.
Während in dem mit erfindungsgemäßem Rückspülmittel beschickten Filter 2 (rechts) keine farblich markierten Schichten mehr zu erkennen sind, zeigt Filter 1 (links) noch eine deutliche farblich markierte Schichtung. Lediglich im obersten Teil des Filters ist eine Vermischung der markierten und nicht markierten Filterkörner zu erkennen und die darunter liegenden 5 Schichten zeigen in der Mitte eine Verminderung der markierten Kieselkörner.
Dies bedeutet aber, daß unter Zusatz von erfindungsgemässem Rückspülmittel bei sonst gleichen äußeren Bedingungen eine wesentlich bessere Fluidisierung des Filterbettes beim Rückspülvorgang stattfindet, als dies ohne Zusatz von erfindungsgemäßem Rückspülmittel geschieht. Bereits nach einem Rückspülvorgang über 10 Minuten ist eine völlige Vermischung des Filterbettes nachweisbar.

**2.2 Testung der Wirksamkeit des erfindungsgemäßen Mittels hinsichtlich des Summenaustrages und der Austragstiefe von Schmutzteilchen**

Zur Testung der Wirksamkeit von erfindungsgemäßem Rückspülmittel hinsichtlich Summenaustrag und Austragstiefe von Schmutzteilchen wurden in einer zweiten Versuchsserie folgende Tests durchgeführt:

2.2.1. Die Filter wurden wiederum nicht beflockt oder verunreinigt.

2.2.2. In beide Filter wurden jeweils 50 unterschiedlich farblich markierte Polystyrolkugeln mit einem mittleren Durchmesser von 1 mm unterschiedlich tief in die Filter eingebracht.

2.2.3. Filter 2 wurde wiederum erfindungsgemäßes Rückspülmittel in einer Menge von 2 Ltr./m³ zudosiert.

2.2.4. Nach einer reinen Luftspülung mit 0,5 bar und einer Luftgeschwindigkeit von ca. 0,65 m/Stunde wurde eine Luft-Wasserspülung mit einem Wasserdruck von 0,5 bar und einer Wassergeschwindigkeit von 10 m/Stunde sowie einem Luftdruck von 0,5 bar und einer Luftgeschwindigkeit von ca. 60 m/Stunde durchgeführt. Dieser Rückspülvorgang dauerte wiederum 10 Minuten.

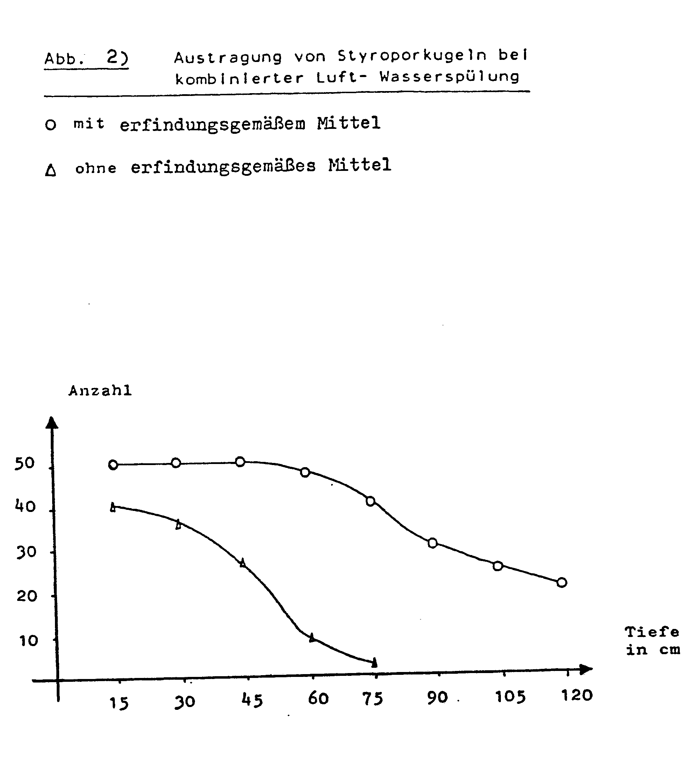

2.2.5. Für beide Filter wurde das gesamte rückgespülte Wasser gesammelt und die im Rückspülwasser vorhandenen Polystyrolkügelchen nach Farbe und Zahl ausgewertet.
Die Ergebnisse dieser Untersuchungen sind in Abb. 2 graphisch aufgezeichnet worden. Die Kreise und Dreiecke stellen Mittelwerte von drei Untersuchungsserien dar, wobei für die einzelnen Werte nur ganz geringe Abweichungen resultierten.
Aus dieser Grafik kommt deutlich zum Ausdruck, daß bei dem Rückspülvorgang mit Zudosierung von erfindungsgemäßem Rückspülmittel bezüglich des Summenaustrages und auch hinsichtlich der Austragstiefe ein wesentlich besserer Effekt erzielt werden konnte, als bei der Rückspülung ohne Zugabe von erfindungsgemäßem Rückspülmittel. Während mit erfindungsgemäßem Rückspülmittel bis zu einer Schichttiefe von 60 cm hoch alle luftgeschäumten Polystyrolkugeln und bis zu 120 cm Tiefe immerhin noch über 50 % der Polystyrolkugeln ausgetragen wurden, zeigte der Rückspülvorgang ohne erfindungsgemäßes Rückspülmittel bereits für die 15 cm und 30 cm Schichttiefe nur einen 80 %-igen Austrag der Polystyrolkugeln und in einer Schichttiefe von 75 - 120 cm wurden überhaupt keine Polystyrolkugeln mehr ausgetragen.

**2.3. Testung der Wirksamkeit des erfindungsgemäßen Mittels bei der Austragung von Flockungsmittelzusatz ($Al_2 (SO_4)_3 \cdot 18 H_2O$)**

Um die Wirksamkeit von erfindungsgemäßem Rückspülmittel bei der Austragung von Flockungsmittelzusatz ($Al_2 (SO_4)_3 \cdot - 18 H_2O$) während des Rückspülvorganges zu testen, wurden in einem dritten Versuchsansatz folgende Parameter getestet.

4

2.3.1. Beide Filter wurden während der Filtration mit jeweils 20 g Flockungsmittelzusatz pro Filter beflockt.

2.3.2. Es wurde eine reine Wasserspülung mit steigendem Druck von 0,1 bis 0,65 bar durchgeführt.

2.3.3. Filter 2 wurde erfindungsgemäßes Rückspülmittel in einer Menge von 2 ltr/m$^3$ zudosiert.

2.3.4. Für jede getestete Druckstufe wurden parallel für Filter 1 und Filter 2 jeweils 5 ltr. Rückspülflüssigkeit entnommen und diese auf ihren Gehalt an Aluminiumsulfat mit Hilfe der Atomadsorptionsanalyse gemessen.

Die Ergebnisse dieser Untersuchungen sind in Abb. 3 dargestellt. Jeder Punkt stellt den Mittelwert von drei Untersuchungen dar. Gleichzeitig sind die Abweichungen der Absolutwerte aufgetragen worden. Bei diesen Werten handelt es sich um das Delta, d. h. die Differenz der Menge an rückgespültem Aluminiumsulfat mit und ohne Zugabe von erfindungsgemäßen Rückspülmittel. Die Meßwerte oberhalb der Null-Linie zeigen eine positive Differenz für die Rückspülung mit erfindungsgemäßem Rückspülmittel, die Meßwerte unterhalb der Null-Linie eine positive Differenz für die Rückspülung ohne erfindungsgemäßes Rückspülmittel an. Wie aus dieser Darstellung deutlich zu erkennen ist, wird durch Zusatz von erfindungsgemäßem Rückspülmittel beim Rückspülvorgang wesentlich mehr Flockungsmittelzusatz (Aluminiumsulfat) herausgetragen und dieses geschieht in einem Wasserdruckbereich von 0,1 - 0,35 bar. Ohne Zusatz von erfindungsgemäßem Rückspülmittel ist der Austrag von Flockungsmittelzusatz (Aluminiumsulfat) wesentlich geringer und benötigt für einen entsprechenden Effekt zudem eine wesentlich höheren Wasserdruck (0,35 - 0,5 bar).

**2.4. Untersuchungen zur Filterkapazität von Kiesfiltern nach Rückspülung mit erfindungsgemäßem Mittel**

Um herauszufinden inwieweit die Filterkapazität nach dem Rückspülvorgang unter Zugabe von erfindungsgemäßem Rückspulmittel beeinträchtigt wird, wurden in einem letzten Versuchsansatz die Erstfiltrate nach Rückspülvorgang mit und ohne Zusatz von erfindungsgemäßem Rückspülmittel auf ihren Gehalt an Flockungsmittel (Aluminiumsulfat) geprüft. Hierzu wurde wie folgt verfahren:

2.4.1. Beide Filter wurden mit jeweils 20 g pro Filter Flockungsmittelzusatz beflockt.

2.4.2. Es wurde ein entsprechender unter 2 und 3 dargestellter Rückspülvorgang durchgeführt.

2.4.3. Nunmehr wurde eine normale Filtration durchgeführt und gleichzeitig Flockungsmittel zugesetzt.

2.4.4. Parallel für beide Filter wurden Erstfiltrate im Abstand von einer Minute entnommen und auf ihren Gehalt an Aluminium getestet.

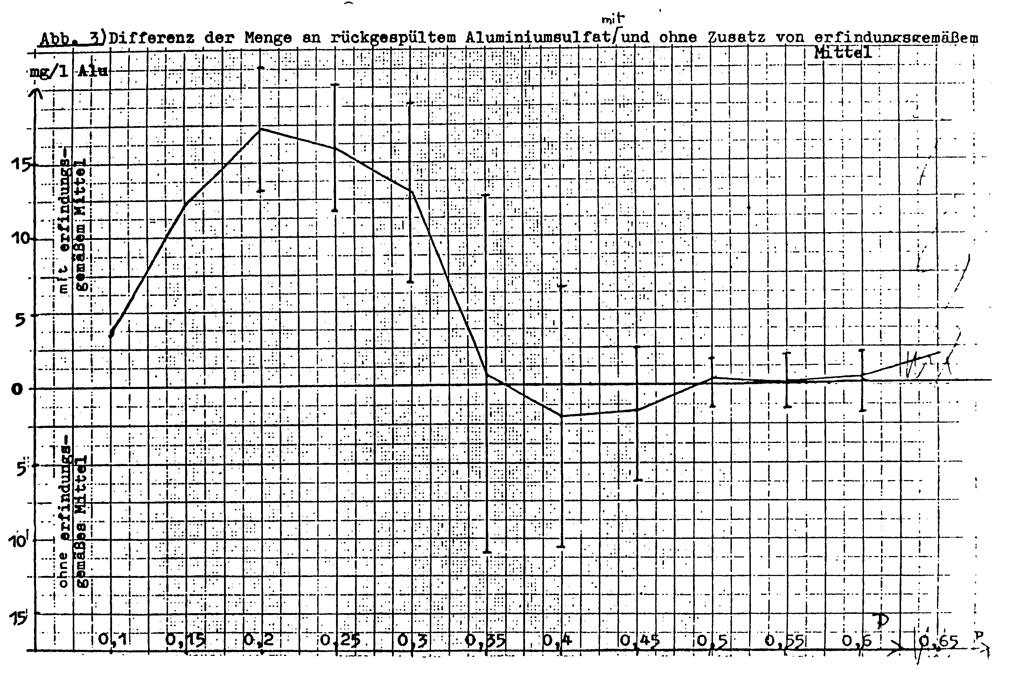

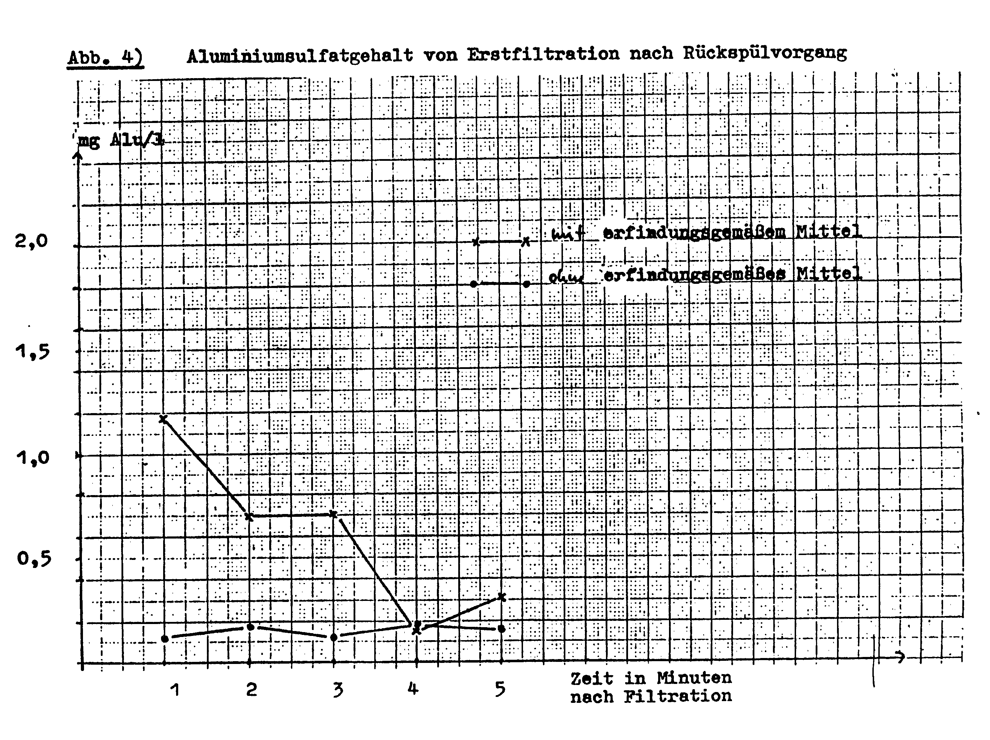

Die Ergebnisse dieser Untersuchungen sind in Abb. 4 dargestellt.

Wie die Grafik zeigt, können im Erstfiltrat des Filters der unter Zusatz von erfindungsgemäßem Rückspülmittel rückgespült worden ist, noch in den ersten 3 Minuten der Filtration leicht erhöhte Aluminiumsulfat-Werte nachgewiesen werden.

Nach 4 Minuten Filtrationszeit entsprechen diese Werte jedoch den Filtrationsproben, die aus dem Filter stammen, der nicht mit erfindungsgemäßem Rückspülmittel rückgespült worden ist. Auch nach längerer Filtrationszeit (2 Stunden und 10 Stunden) konnten keine Unterschiede in den Aluminiumsulfatkonzentrationen bei den Proben des mit erfindungsgemäßem Rückspülmittel rückgespülten Filters gegenüber dem Filter der nicht mit erfindungsgemäßem Rückspülmittel rückgespült war, festgestellt werden.

**3. Toxizität und Abbaubarkeit**

Das erfindungsgemäße Mittel besteht aus chemisch stabilen anionischen wasserlöslichen Polyacrylaten. Es stellt ein nichthydrolyseempfindliches Dispergiermittel dar. In akuten und subakuten Toxizitätstests an Ratten und Mäusen konnte für das erfindungsgemäße Rückspülmittel keine Toxizität nachgewiesen werden. Bei den akuten Toxizitätstests erwiesen sich die $LD_{50}$-Werte von erfindungsgemäßem Rückspülmittel in der Größenordnung der $LD_{50}$-Werte von Kochsalz. Bei der subakuten Toxizität wurden 1 ml 40 %-iges erfindungsgemäßes Rückspülmittel pro kg Körpergewicht 4 Wochen lang täglich verabreicht, reaktionslos vertragen. Ebenfalls konnten bei Langzeit-Tierversuchen keinerlei Hinweise auf teratogene Eigenschaften von erfindungsgemäßem Rückspülmittel dargestellt werden. Daneben konnte festgestellt werden, daß erfindungsgemäßes Rückspülmittel dem biologischen Abbau gut zugänglich ist.

**4. Zusammenfassung**

Die Versuchsergebnisse zeigen, daß bei Zugabe von geringen Mengen an erfindungsgemäßem Mittel in das Rückspülwasser

- bereits bei geringerem Wasserdruck eine vollständige Fluidisierung des üblicherweise benutzten Kiesfilters mit einer Korngröße von 0,8 - 1,2 mm erreicht werden kann,

- der Austrag von Verschmutzungen wesentlich intensiver und auch aus den untersten Filterschichten stattfindet,
- Aluminiumsulfat flocken mit wesentlich geringerem Wasserdruck und in größerer Menge ausgetragen werden und
- die Filterkapazität nach dem Rückspülvorgang mit erfindungsgemäßem Rückspülmittel voll erhalten bleibt.

Aufgrund der fehlenden Toxizität, der guten Abbaubarkeit und der Möglichkeit des gezielten Einsatzes während eines Aufbereitungsvorganges, wobei zudem das Badewasser an sich nicht belastet wird, ermöglicht aufgrund der dargestellten Befunde das erfindungsgemäße Mittel eine eindeutig bessere Reinigung des Kiesfilters beim Rückspülvorgang.

**Tabelle** Beschreibung der einzelnen Komponenten der Versuchsanlage

I.) A) Filter:
1. Anzahl: 2
2. Höhe: 1700 mm
3. Durchmesser: 100 mm
4. Material: PVC (Polyvinylchlorid)

B) Filterbeschickung:
Material: Quarzsand (96 % $SiO_2$)
Korngruppe: 0,8 - 1,2 mm
Schichthöhe: 1200 mm

II.) A) Becken:
1. Breite: 1480 mm
2. Höhe: 600 mm
3. Tiefe: 390 mm
4. Inhalt gemäß Wasserstand: 300 Liter
5. Material: Glas von 10 mm Dicke

III.) A) Verrohrung:
1. Material: PVC (Polyvinylchlorid)
2. Durchmesser: 20 mm

IV.) A) Armaturen: Schieber:
1. Prinzip: Kugelhahn
2. Öffnung: 20 mm
3. Material: Gußeisen
Manometer:
1. Typ: Federmanometer (VDO)
2. Meßprinzip:Kapselfeder
3. Meßbereich: 0 - 1,6 bar

B) Pumpen-Hauptpumpe:
1. Typ: Kreiselpumpe (Eheim® 1030)
2. Prinzip: Kreiselpumpe
3. Leistung: 68 Watt
4. $H_{max}$: 4 m Wassersäule
22 l/Min
0,65 Amp

Dosierpumpe für Flocke und Filterhilfsmittel
1. Typ: Dosierpumpe Cfg-Prominent (eingetragenes Warenzeichen)
2. Leistung: 0,65 l/Stunde gegen 20 bar

C) Kompressor:
1. Kesselinhalt: 10 Liter
2. Ansaugleistung: 100 Liter/Min.
3. Betriebsdruck: 8 bar
4. Motorleistung: 0,65 PS (0,478 Watt)

# EP 0 104 341 B1

## Patentansprüche

1. Verfahren zur Reinigung von partikelhaltigen rückspülbaren Filterbetten bei der Wasseraufbereitung von Schwimmbad-, Trink- und Abwasseraufbereitungsanlagen, wobei das Filterbett im Gegenstrom zur Filtriervorrichtung mit einem fließfähigen Rückspülmittel beaufschlagt wird,
dadurch gekennzeichnet,
daß das Rückspülmittel als nicht hydrolyseempfindliche, wasserlösliche, grenzflächenaktive Substanz Polyacrylate im Molekulargewichtsbereich von 500 bis 500 000 Daltons enthält.

2. Verfahren gemäß Anspruch 1,
dadurch gekennzeichnet,
daß als fließfähiges Rückspülmittel eine tensid-haltige Lösung verwendet wird, die als Tensid oder Tenside, Anion-Tenside, Kation-Tenside, Amphotenside, beispielsweise Seifen, und gegebenenfalls zusätzlich ein oder mehrere Polyelektrolyte, beispielsweise ein Polyphosphat eines Molekulargewichts beispielsweise von 5000 Daltons enthält.

## Claims

1. A method of cleaning filter beds, which contain particles and which can be back-washed, in the water treatment of swimming pool, drinking and waste-water treatment installations, wherein the filter bed is acted upon by a flowable back-washing medium in counterflow to the filtering device, characterised in that, as a water-soluble surface-active substance which is not sensitive to hydrolysis, the back-washing medium contains polyacrylates within the molecular-weight range of from 500 to 500,000 daltons.

2. A method according to Claim 1, characterised in that a surfactant-containing solution is used as the flowable back-washing medium, which solution contains as the surfactant or surfactants, anion-surfactants, cation-surfactants, amphoteric surfactants, for example soaps, and optionally in addition one or more polyelectrolytes, for example a polyphosphate of a molecular weight of, for example, 5,000 daltons.

## Revendications

1. Procédé de nettoyage de lits filtrants à particules, lavables à contre-courant, pour le traitement des eaux dans des installations de traitement d'eau de piscine, d'eau potable et d'eaux usées, dans lequel le lit filtrant est chargé avec un produit coulant de lavage à contre-courant, appliqué à contre-courant par rapport au dispositif de filtrage, caractérisé en ce que le produit de lavage contient, en tant que substance tensio-active soluble dans l'eau et non sensible à l'hydrolyse, des poly-acrylates d'une gamme de poids moléculaire de 500 à 500.000 daltons.

2. Procédé selon la revendication 1, caractérisé en ce qu'on utilise, comme produit coulant de lavage à contre-courant, une solution d'agents tensio-actifs, qui contient, comme agent tensio-actif ou agents tensio-actifs, des agents tensio-actifs anioniques, cationiques, amphotères, par exemple des savons, et éventuellement en plus, un ou plusieurs poly-électrolytes, par exemple un polyphosphate d'un poids moléculaire de, par exemple, 5.000 daltons.

Abb. 1)    Fliesschema des Kreislaufs

Abb. 2)   Austragung von Styroporkugeln bei
          kombinierter Luft- Wasserspülung

O  mit erfindungsgemäßem Mittel

Δ  ohne erfindungsgemäßes Mittel

Abb. 3) Differenz der Menge an rückgespültem Aluminiumsulfat mit und ohne Zusatz von erfindungsgemäßem Mittel

Abb. 4)   Aluminiumsulfatgehalt von Erstfiltration nach Rückspülvorgang

mg Al₂/3

x   mit   erfindungsgemäßem Mittel

●   ohne   erfindungsgemäßes Mittel

2,0

1,5

1,0

0,5

1   2   3   4   5

Zeit in Minuten
nach Filtration